(19) Europäisches Patentamt
European Patent Office
Office européen des brevets

(11) Publication number: **0 084 246**
**A2**

# (12) EUROPEAN PATENT APPLICATION

(21) Application number: 82306827.5

(22) Date of filing: 21.12.82

(51) Int. Cl.³: A 23 L 1/227
A 24 B 15/30

(30) Priority: 23.12.81 US 333829

(43) Date of publication of application: 27.07.83 Bulletin 83/30

(84) Designated Contracting States: BE CH DE FR GB IT LI NL

(71) Applicant: PHILIP MORRIS INCORPORATED
120 Park Avenue
New York, New York 10017(US)

(72) Inventor: Semp, Bernard Albert
4133 Dorset Court
Richmond Virginia 23234(US)

(72) Inventor: Swain, James Warren
9625 Kendrick Road
Richmond Virginia 23234(US)

(72) Inventor: Wu, Louise Sanders
4405 Fordham Road
Richmond Virginia 23236(US)

(74) Representative: Bass, John Henton et al,
REDDIE & GROSE 16 Theobalds Road
London WC1X 8PL(GB)

## (54) Flavorants for smoking compositions.

(57) This invention provides a cooked flavorant product which is adapted for incorporation into smoking compositions. The flavorant is the condensation product of single cell, especially yeast, protein hydrolysate and a reducing sugar, optionally with the inclusion of an aldehyde. The reaction is preferably carried out in an alkaline medium, for example pH 7.5-10, at 70-150°C for 0.2-5 hours.

EP 0 084 246 A2

# FLAVORANTS FOR SMOKING COMPOSITIONS

## BACKGROUND OF THE INVENTION

The increased demand for low delivery smoking products has necessitated a need for redesigning flavor systems compatible with these products. Low delivery smoking products are generally designed to deliver 15 mg of tar or less. Tar is generally defined as the total particulate matter (TPM) that is collected on a Cambridge filter minus the nicotine and water content. Manufacture of low delivery products is generally achieved by use of highly efficient ventilated filters, porous wrappers, modified tobacco blends, and the like. The use of porous wrappers and/or ventilated filters results in considerable air dilution of the smoke with a concomitant dilution of flavorants entrained in the smoke. In order to overcome the problem of "flavor dilution" new systems for flavor incorporation are required.

It is generally recognized that simply adding additional amounts of individual flavorants is not feasible in that pronounced "pack aroma" usually results. Moreover, addition of excessive flavorants to smoking materials may result in increased density of the materials and a decrease in the filling capacity thereof. A flavor system for low delivery cigarettes having increased impact and "full body" is therefore desirable to overcome the presently recognized problems. Since reconstituted tobacco is an ideal filler for low delivery

cigarettes, it is important that flavor systems be designed that are capable of overcoming the "stemmy" taste generally associated with some reconstituted tobaccos. Moreover, it is necessary to design a system wherein the flavorants may be added in extremely low amounts and still maintain the desired flavor level and physical characteristics described above.

The reaction of sugars and amino acids to produce desirable flavorants for smoking materials is one of increasing interest. For example, U.S. patent 3,478,015 describes "browning reactions" in which an amino acid and a sugar having an active carbonyl are reacted in a lower alkyl polyhydric alcohol solvent in the absence of water at a temperature less than 90°C for about 5-15 hours. The resultant reaction mixture is applied in an amount of about 1% by weight to tobacco.

U.S. patent 3,920,026 describes tobacco flavorants prepared by reacting valine with a carbonyl compound selected from sugars, dihydroxy acetone or pyruvaldehyde. The reaction is conducted in a solvent such as glycerol or propylene glycol and at a temperature between about 120°-200°C for 0.5-5 hours depending on the type of sugar used. The reaction mixture may be applied directly on tobacco or may be fractionated to separate the volatile and nonvolatile fractions, which are then used as tobacco flavorants.

U.S. patent 3,722,516 discloses the addition of dihydroxyacetone alone or in combination with amino acids to enhance the natural flavor characteristics of tobacco, and especially the caramel-like or burned sugar-like aroma thereof.

Japanese patent 9239/71 discloses certain tobacco "perfumes" such as 1-deoxy-1-L-prolino-D-fructose, which is a sugar-amino acid condensation product. This type compound is prepared by reacting an amino acid with a sugar in an aqueous or alcohol solvent, and usually in the presence of an acid catalyst such as malonic acid. The desired product can be separated and purified by the use of ion-exchange resins and thereafter be applied to tobacco.

Japanese Patent 3398/73 discloses certain other specific amino acid-sugars such as 1-deoxy-1-L-alanino-D-fructose that are synthesized from their respective components by the Amadori rearrangement, in the presence of malic acid as catalyst, by heating at 130°C for 15 minutes. The specific compounds are isolated and can be combined with cocoa to produce tobacco flavorants.

Two articles by Koehler (J. Agr. Food Chem., 17, No. 2, p. 393-396, 1969 and ibid., 18, No. 5, p. 895-898, 1970) discuss pyrazine formation in sugar-amino acid model systems. The normal model system consisted of asparagine and glucose reactants in a 1:1 molar ratio. Diethylene glycol solvent and a small amount of water were also employed. The mixture was heated for 24 hours at 120°C. The use of a base catalyst, such as sodium hydroxide or ammonium hydroxide, resulted in an increase in the production of volatile alkylated pyrazines. In some instances, the addition of an aldehyde such as acetaldehyde appeared to increase pyrazine formation. The

Koehler investigations were related to browning reactions known to occur in foods such as roasted peanuts, coffee, cocoa, and potato chips, and the primary objective was to determined the chemical factors involved in volatile pyrazine formation during these reactions.

More recent developments relating to sugar-amino acid reaction products such as tobacco flavorant compositions are described in our U.S. patent 4,306,577 and U.S. patent application Serial No. 235,456 (filed February 18, 1981).

There is continuing interest in the development of new and improved flavorants for smoking compositions.

The invention is characterised by the condensation of reactants comprising single cell protein hydrolysate and a reducing sugar, typically in an alkaline aqueous medium at a temperature between 70°-150°C, and for a reaction period between 0.2 and 5 hours.

The molar ratio of reducing sugar to hydrolysate amino acid content normally will vary in the range

between 1:1 and 7:1. By "amino acid content" is meant the amino acid constituents which are capable of condensing with the reducing sugar under the process conditions.

The term "reducing sugar" refers to monosaccharides and polysaccharides that reduce copper or silver salts under alkaline conditions. Suitable reducing sugars for the practice of the present invention include glucose, fructose, mannose, galactose, maltose, rhamnose, and the like.

The term "single cell" refers to single cell microorganisms such as bacteria, yeasts, moulds, and fungi. Particularly suitable for the practice of the present invention are yeasts of the genus Saccharomyces such as S. cerevisiae and S. nuaris or yeasts of the genus Candida such as Candida utilis.

The term "hydrolysate" refers to an amino acid-containing mixture which is produced by hydrolyzing the protein content of a single cell substrate in an acidic aqueous medium (e.g., a pH of 1-6). Preferably, the acidity is provided by phosphoric acid, and the hydrolysis reaction is conducted at a temperature between about 60°-130°C for a period between about 0.5-5 hours.

In another embodiment, this invention provides a cooked flavorant product which is produced by a process which comprises heating an admixture of reactants comprising single cell protein hydrolysate, a reducing sugar and an aldehyde compound in an alkaline aqueous medium at a temperature between about 70°-150°C, typically for a reaction period between about 0.2-5 hours.

Preferably the aldehyde compound is employed in a quantity between about 0.001-0.1 mole, per mole of reducing sugar. Suitable aldehyde compounds include those corresponding to the formula:

$$R\text{-}CHO$$

where R is an aliphatic, alicyclic or aromatic radical containing between about 2-12 carbon atoms. The R radical can contain heteroatoms such as oxygen, nitrogen and sulfur, with the proviso that the R radical does not contain any atoms or functional groups which are detrimental for the purposes of the eventual cooked flavorant product applications.

Illustrative of aldehyde compounds are acetaldehyde, pyruvaldehyde, butyraldehyde, isovaleraldehyde, benzaldehyde, 3-methoxy-4-hydroxybenzaldehyde, and the like.

An essential aspect of the present invention method of preparing a cooked flavorant product is the provision of an alkaline aqueous reaction medium, e.g., a pH between about 7.5-10. The said alkalinity serves to hydrolyze any polysaccharides present to monosaccharides, and also serves to enhance the condensation of the reducing sugar and amino acid reactants.

The alkalinity can be achieved with a basic reagent such as alkali and alkaline earth metal hydroxides, quaternary amines, and the like. The use of ammonium hydroxide is particularly preferred since it tends to modify and enhance the organoleptic properties of the cooked flavorant product that is produced.

The process for preparing a cooked flavorant product can be conducted in a reaction vessel equipped with reflux, stirring and heating means. In a typical procedure the reaction medium at atmospheric pressure is heated gradually until a temperature level of about 90°-115°C is achieved (e.g., for a heating period of about 0.5- 5 hours).

It is advantageous to quench the reaction medium by dilution with a volume of water after the reaction is completed. A 1:1 to about 5:1 dilution with water provides an aqueous flavorant medium which is adapted for direct application to smoking composition filler material.

As a further embodiment this invention provides smoking compositions which are prepared by admixing natural tobacco and/or reconstituted tobacco and/or a non-tobacco substitute with a flavorant additive which corresponds to a cooked flavorant product of the type described hereinabove. The smoking compositions normally will contain the flavorant additive in a quantity between about 0.001-5 weight percent, and preferably 0.01-5 weight percent, based on the weight of the smoking composition.

The invention cooked flavorant product can be incorporated into the smoking composition filler in accordance with methods known and used in the art. Preferably the flavorant additive is dissolved in a solvent such as water, propylene glycol or mixtures thereof, and then sprayed or injected into the tobacco or non-tobacco substitute matrix. Such method ensures an even distribution of the flavorant additive throughout the tobacco, and thereby facilitates the production of a more uniform smoking composition. Alternatively, the flavorant may be incorporated as part of a concentrated tobacco extract which is applied to a fibrous tobacco web as in the manufacture of reconstituted tobacco. Another suitable procedure is to incorporate the flavorant in tobacco or non-tobacco substitute filler in a concentration between about 0.5-5 weight percent, based on the weight of filler, and then subsequently to blend the treated filler with filler which does not contain flavorant additive.

Examples of "non-tobacco substitutes" for the purposes of this invention include smoking filler materials such as are disclosed in United States patents 3,529,602; 3,703,177; 3,796,222; 4,019,521; 4,079,742; and references cited therein.

Illustratively, U.S. 3,529,602 desacribes a burnable sheet which may be used as a tobacco substitute, containing ingredients which include (1) a film-forming ingredient comprising a pectinaceous material derived from tobacco plant parts and having an acid value in excess of 30 milligrams of potassium hydroxide per gram, and (2) a mineral ingredient comprising an alkali metal salt, an alkaline earth metal salt or a clay.

U.S. 3,703,177 describes a process for preparing a non-tobacco smoking product from sugar-beet pulp, which process involves the acid hydrolysis of the beet pulp to release beet pectins, and at least an alkaline earth treatment thereafter to cause crosslinking of the pectins and the formations of a binding agent for the exhausted beet matrix.

U.S. 3,796,222 describes a smoking product derived from coffee bean hukks, The hulls are treated with reagents that attack the alkaline earth metal crosslinks causing the release of the coffee pectins. The pectins act as a binding agent and together with the treated hulls may be handled and used similarly to a tobacco product.

U.S. 4,019,521 discloses a process for forming a smoking material which involves heating a cellulosic or carbohydrate material at a temperature of $150^{o}$-$750^{o}C$ in an inert atmosphere for a period of time sufficient to effect a weight loss of at least 60 percent but not more than 90 percent.

U.S. 4,079,742 discloses a process for the manufacture of a synthetic smoking product from a cellulosic material, which process involves a pyrolysis step and a basic extraction step to yield a resultant matrix which has a tobacco-like brown color and has improved smoking characteristics.

The following examples are further illustrative of the present invention. The reactants and other specific ingredients are presented as being typical, but various modifications can be devised and employed in accordance with the invention.

EXAMPLE I

This Example illustrates the preparation of a present invention cooked flavorant product, and the incorporation of the product in a smoking composition.

A 30 gram quantity of freeze-dried Brewer's yeast (S. nuaris) is added to 200 milliliters of 85% phosphoric acid in a reaction flask, and the mixture is sparged with nitrogen for ten minutes. The flask is evacuated with a vacuum pump and then sealed.

The flask is placed in an autoclave and heated at 127°C for about two hours to provide a protein hydrolysate material. The hydrolysate is recovered, and a 100 gram quantity is separated and admixed with concentrated ammonium hydroxide to a pH of about 8.0.

The alkaline hydrolysate material is charged to a reaction vessel equipped with a reflux condenser, thermometer and stirrer. To the vessel is added about 250 grams of high fructose corn syrup (about 72% fructose; Clinton Corn Sweeteners).

The admixture in the vessel is heated at 100°C for three hours. The resultant reaction product mixture is diluted 1:1 by volume with water.

An aliquot of aqueous cooked flavorant product produced in the manner described above is sprayed on reconstituted sheet to provide a level of about 1.0 weight percent flavorant

based on the weight of tobacco sheet. After drying, the tobacco sheet is incorporated into a typical tobacco blend at 20 weight percent level.

Cigarettes having conventional cellulose acetate filters and designed to deliver about 17 milligrams TPM are fabricated and then smoked by an experienced panel of smokers. Cigarettes of a similar blend containing conventionally flavored reconstituted tobacco are employed as controls. The cigarettes containing the present invention flavorant are judged to be slightly harsher, hotter, sweeter and more spicy than the control cigarettes.

Similar results are obtained when freeze-dried Baker's yeast (*S. cerevisiae*) is substituted for the Brewer's yeast. In addition, flavorants prepared using *Candida utilis* hydrolysate are found to be satisfactory.

Similar results are obtained when glucose is substituted for the fructose reactant.

EXAMPLE II

This Example illustrated the amino acid content of single cell protein hydrolysates.

In separate runs, Brewer's yeast, Baker's yeast, and *Candida utilis* are hydrolyzed for three hours with phosphoric acid in the manner described in Example I. The amino acid contents of the hydrolysates are as follows:

| Amino Acid | Brewer's Yeast mg/g* | Baker's Yeast mg/g* | *Candida utilis* mg/g* |
|---|---|---|---|
| Alanine | 31.1 | 29.3 | 28.2 |
| Valine | 23.3 | 20.0 | 22.0 |
| Glycine | 16.7 | 16.0 | 14.9 |
| Isoleucine | 16.7 | 14.7 | 14.8 |
| Leucine | 31.1 | 25.3 | 28.9 |
| Proline | 18.9 | 16.0 | 13.0 |
| Threonine | 8.9 | 6.7 | 9.6 |
| Serine | 8.9 | 5.3 | 8.6 |
| Methionine | 4.4 | 2.7 | 2.7 |
| Phenylalanine | 16.7 | 13.3 | 16.5 |
| Aspartic Acid | 35.6 | 30.7 | 30.7 |
| Glutamic Acid | 51.1 | 41.3 | 45.6 |
| Tyrosine | 2.2 | 2.7 | 1.5 |
| Lysine | 26.7 | 26.7 | 26.7 |
| Histidine | 7.8 | 4.0 | 9.7 |
| Arginine | 22.2 | 10.7 | 18.4 |
| Cystine | 0.8 | 0.7 | 0.0 |
| TOTAL | 323.5 | 266.1 | 291.8 |

* mg Amino Acid/g hydrolysate

EXAMPLE III

In a manner similar to that described in Example I, a protein hydrolysate is prepared by phosphoric acid hydrolysis of Brewer's yeast.

A 100.3 gram quantity of the hydrolysate is treated with concentrated ammonium hydroxide to a pH of 8.4.

The alkaline hydrolysate is admixed with 250 grams of high fructose corn syrup and 1.5 grams of isovaleraldehyde, and the admixture is heated at 100°C with stirring for three hours. The resultant product mixture is diluted 1:1 by volume with water.

The present invention aqueous cooked flavorant product thus produced is employed to flavor cigarettes for testing by experienced smokers. The cigarettes containing the present invention flavorant are judged to be slightly harsher and more bitter and spicy than the control cigarettes.

EXAMPLE IV

In a manner similar to Example 1, a protein hydrolysate is prepared by phosphoric acid hydrolysis of Candida utilis.

A 100 g quantity of the hydrolysate is treated with concentrated ammonium hydroxide to a pH of 8.6. The alkaline hydrolysate is mixed with 250 g of high fructose corn syrup and heated to 100°C and held for 2.5 hours. The resultant product mixture is diluted 1:1 with water.

Cigarettes are prepared by injecting 5 ml into the tobacco rod of a 17 mg delivery cigarette and smoked by an experienced panel of smokers. Control cigarettes containing a similar blend not treated with the cooked flavorant were smoked and compared to the experimental cigarette. The experimental cigarettes were found to be balanced, had alkaloid character and were less harsh.

## CLAIMS

1. A cooked flavorant which comprises the condensation product of reactants comprising single cell protein hydrolysate and a reducing sugar.

2. A flavorant in accordance with claim 1 wherein the molar ratio of reducing sugar to hydrolysate amino acid content is between 1:1 and 7:1.

3. A flavorant in accordance with claim 1 or 2 wherein the condensation reactants include a aldehyde compound in a quantity between 0.001 and 0.1 mole per mole of reducing sugar.

4. A flavorant in accordance with claim 1, 2 or 3 wherein the protein hydrolysate is a mixture obtained by acid hydrolysis of Baker's yeast, Brewer's yeast or Candida utilis biomass.

5. A flavorant in accordance with any of claims 1 to 4 wherein the reducing sugar is fructose, glucose, mannose or galactose.

6. A flavorant in accordance with claim 3 wherein the aldehyde compound is acetaldehyde, pyruvaldehyde, butyraldehyde or isovaleraldehyde.

7. A process for preparing a cooked flavorant in accordance with any of claims 1 to 6 which comprises heating an admixture of reactants comprising single cell protein hydrolysate and a reducing sugar in an alkaline aqueous medium to a temperature between $70^{o}$ and $150^{o}C$ for a reaction period between 0.2 and 5 hours.

8. A process in accordance with claim 7 wherein the pH of the alkaline aqueous medium is in the range between 7.5 and 10.

9. A process in accordance with claim 8 wherein the alkaline pH is provided by ammonium hydroxide.

10. A smoking composition comprising a filler material selected from tobacco, reconstituted tobacco or non-tobacco smoking substitutes, and a flavorant according to any of claims 1 to 6 or produced by a process according to any of claims 7 to 9 preferably in a quantity between 0.01 and 5 percent based on the weight of the filler material.